(19) Europäisches Patentamt
European Patent Office
Office européen des brevets

(11) EP 1 178 549 A2

(12) EUROPEAN PATENT APPLICATION

(43) Date of publication:
**06.02.2002 Bulletin 2002/06**

(51) Int Cl.[7]: **H01M 4/58**, H01M 4/62, C04B 35/52, C01B 31/00

(21) Application number: **01118264.9**

(22) Date of filing: **30.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.07.2000 JP 2000231617**
**05.07.2001 JP 2001204381**

(71) Applicant: **Kawasaki Steel Corporation**
**Kobe-shi, Hyogo 651-0075 (JP)**

(72) Inventors:
- **Eguchi, Kunihiko,**
  **c/o Kawasaki Steel Corporation**
  **Chiba-shi, Chiba 260-0835 (JP)**
- **Nagayama, Katsuhiro,**
  **Kawasaki Steel Corporation**
  **Chiba-shi, Chiba 260-0835 (JP)**
- **Hatano, Hitomi, c/o Kawasaki Steel Corporation**
  **Chiba-shi, Chiba 260-0835 (JP)**
- **Ijiri, Makiko, c/o Kawasaki Steel Corporation**
  **Chiba-shi, Chiba 260-0835 (JP)**
- **Suzuki, Toshihide,**
  **c/o Kawasaki Steel Corporation**
  **Chiba-shi, Chiba 260-0835 (JP)**

(74) Representative: **Henkel, Feiler, Hänzel**
**Möhlstrasse 37**
**81675 München (DE)**

(54) **Carbon substrate, anode for lithium ion rechargeable battery and lithium ion rechargeable battery**

(57) Carbon substrate carrying an organic polymer containing aliphatic amino groups on its side chain, for a lithium ion rechargeable battery, the carbon substrate showing a high initial charge-discharge efficiency and discharge capacitance.



Printed by Jouve, 75001 PARIS (FR)

## Description

### BACKGROUND OF THE INVENTION

#### 1. Field of the Invention

The present invention relates to a carbon material (carbon substrate) and an anode (negative electrode) for a lithium ion rechargeable battery using the carbon substrate, and a rechargeable lithium battery showing a high initial charge-discharge efficiency and discharge capacitance.

#### 2. Description of the Related Art

Batteries have been required to show a higher energy density as electronic appliances are made smaller. A lithium rechargeable battery having lithium in an anode (negative electrode) has been considered under these circumstances, since it has high energy density and high output voltage.
It is known in the art that the anode deteriorates and charge-discharge cycles are shortened when pure metallic lithium is used as the anode, since the lithium is deposited as dendrites during charging of the battery. Lithium deposited as dendrites sometimes penetrates the separators and reaches the anode, which may cause short circuit of the battery.
Accordingly, it has been proposed to construct both the cathode and anode with different compounds that function as lithium ion retainers and have different oxidation-reduction potentials with each other. In other words, studies have been made of compounds that are able to form intercalated and deintercalated lithium ions dissolved in a non-aqueous solvent during the charge-discharge process, in a lithium rechargeable battery.
A carbon substrate that is able to occlude and discharge lithium ions, and can prevent metallic lithium from precipitating, has been proposed as the anode material. Examples of the proposed materials comprise graphite and a carbon substrate having a turbulent layer structure. Graphite having excellent charge-discharge characteristics and exhibiting a high discharge capacitance and flat potential is considered to be promising among the proposed materials (Japanese Examined Patent Application Publication No. 62-23433).
The lithium ion rechargeable battery comprising graphite as the anode material involves, on the other hand, a problem of so-called low initial charge-discharge efficiency, since its irreversible capacitance remarkably increases in the first cycle. For example, the battery exhibits a discharge capacitance loss at a current density level of several tens to several hundreds mAh/g at the initial discharge. Although not all the causes of this phenomenon have been made clear yet, one of the causes may be ascribed to the fact that graphite reacts actively to electrolytes. It has been reported that solvents or retained electrolytes actually decompose on the surface of graphite. Decomposition products are deposited and grown on the surface of graphite (carbon) as a result of this decomposition reaction. This deposition and growth progresses until the deposited layers have grown to a thickness that does not permit electrons to be directly transferred from the surface of the graphite into the solvent. It is also reported that the surface layer of graphite is peeled down as a result of co-intercalation between solvent molecules and lithium ions, and the irreversible capacitance may be increased (the initial charge-discharge efficiency may become low) by allowing the freshly exposed graphite surface to react with the electrolyte solution [Journal of Electrochemical Society, vol. 137, 2009 (1990)].
Such increase of the irreversible capacitance (low initial charge-discharge efficiency) may be compensated by including a cathode material in the rechargeable battery. However, it is desirable to avoid adding excess cathode material in order to prevent a new problem of decrease of energy densities.
The following measures have been proposed for reducing the irreversible capacitance (or for improving the initial charge-discharge efficiency), i.e., an amine compound is dissolved in the electrolyte solution to inactivate the surface of the carbon substrate (Japanese Unexamined Patent Application Publication Nos. 8-236155 and 5-29019). However, the irreversible capacitance is not fully reduced by the methods described in the patent publications above.
Disclosed art also comprises coating various carbon substrates with resins. For example, a powder of mesocarbon micro-beads converted into a graphite powder is coated with a solid polymer electrolyte such as tetrafluoroethylene -perfluorovinylether copolymer (Japanese Unexamined Patent Application Publication No. 7-235328); a powder of artificial graphite is coated with polyethylene oxide (Japanese Unexamined Patent Application Publication No. 8-213001); artificial graphite has a coating film prepared by cross-linking a polyether compound such as polypropylene glycol and polyethylene glycol-polypropylene glycol copolymer with a silane coupling agent (Japanese Unexamined Patent Application Publication No. 9-161848); pitch coke particles are coated with polyvinyl alcohol, polytetrafluoroethylene, polyethylene or styrene-butadiene rubber (Japanese Unexamined Patent Application Publication No. 9-219188); and the surface of the carbon anode is coated with an ion-conductive polymer such as polyfluorovinylidene or a water soluble polymer such as polyvinyl alcohol and hydroxyethyl cellulose (Japanese Unexamined Patent Application Publication No. 11-120992).
Although the irreversible capacity may be reduced (or the initial charge-discharge efficiency may be improved)

by using a carbon substrate coated with various resins as described above as the anode material of the lithium ion rechargeable battery, the capacity reducing effect is not sufficient. For example, the initial charge-discharge efficiency may be about 71 to 79%, as will be described in Comparative Examples 10 to 18 hereinafter.

The anode is usually manufactured by coating the electrode with a paste prepared by mixing the carbon substrate and a binder together with a solvent. The paste should be thoroughly stirred in obtaining an anode in which the carbon substrate is homogeneously dispersed. However, since the resin as described above has poor adhesion with the carbon substrate, the resin tends to peel off from the carbon substrate by stirring in the process for forming the paste, thereby making it impossible to obtain a sufficient reduction of the irreversible capacitance expected by coating the carbon substrate with the resin. For example, the irreversible capacitance rather increases when stirring the paste at a speed as high as usual. Consequently, a carbon substrate for the anode material that provides sufficiently stable battery characteristics such as reduced irreversible capacity has not been achieved by high speed stirring, such as stirring in the paste-forming process.

## BRIEF SUMMARY OF THE INVENTION

Through intensive studies we have now achieved a surface-modified carbon substrate, or a modified carbon substrate, by allowing the carbon substrate to carry an organic polymer containing aliphatic amino groups (referred as a polymeric amine compound hereinafter) on its side chains. This modified carbon substrate is able to reduce the irreversible capacitance (or improve the initial charge-discharge efficiency) when used as the anode (negative electrode) material of a lithium ion rechargeable battery, while obtaining a high discharge capacitance. In addition, the polymeric amine compound was able to exhibit high adhesion to graphite, to enable the beneficial battery characteristics to be maintained even under high speed stirring during the manufacturing of the anode.

## OBJECTS OF THE INVENTION

Accordingly, it is an object of the present invention is to provide a novel and effective carbon substrate as the anode (negative electrode) material of a lithium ion rechargeable battery.

A further object is to provide a carbon substrate showing a high initial charge-discharge efficiency (or a low irreversible capacitance at the first cycle) and showing a high discharge capacitance when the carbon substrate is used as an anode material of a lithium ion rechargeable battery.

Another object of the present invention is to provide a novel carbon substrate anode for a lithium ion rechargeable battery.

Accordingly, the present invention provides a carbon substrate that further comprises an organic polymer containing aliphatic amino groups on its side chain. The carbon substrate further preferably comprises a polymeric amine compound containing primary amino groups as the aliphatic amino groups, and more preferably comprises a polyallylamine as the organic polymer.

The present invention also provides an anode for a lithium ion rechargeable battery comprising any one of the carbon substrates described above.

The present invention further provides a lithium ion rechargeable battery having an anode as described above.

## BRIEF DESCRIPTION OF THE DRAWINGS

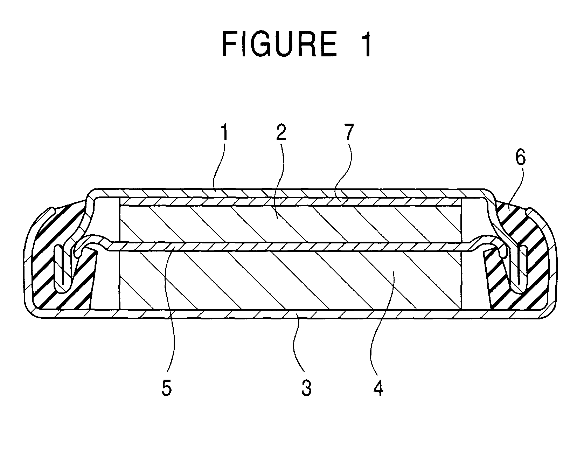

Fig. 1 is a cross section showing an evaluation battery for evaluating characteristics of the carbon substrate.

## DESCRIPTION OF THE PREFERRED EMBODIMENTS

The carbon substrate according to the present invention carries an organic polymer having aliphatic amine groups on its side chains.

This carbon substrate is a modified carbon substrate whose wettability has been improved. Conductivity may accordingly be enhanced by using a smaller amount of the modified carbon substrate as compared to the carbon substrate before modification, when the modified carbon substrate is used by adding a resin as a conductive filler for improving conductivity. Since the aliphatic amine-modified carbon substrate is a reactive material, it may tightly bond to and react with other materials, in contrast to the carbon substrate before modification, when the aliphatic amine-modified carbon substrate is used as a composite material with other materials.

The carbon substrate before combining with a polymeric amine compound may be appropriately selected depending on the objective use of the substrate. A carbon substrate according to the present invention, mainly used as an anodic cathodic material of a lithium ion rechargeable battery, will be described hereinafter as an example.

Any effective carbon substrate may be used as an anode (negative electrode) material of a lithium ion rechargeable battery without any restriction, so long as the carbon substrate is able to occlude and discharge lithium ions as an active substance of the anode (negative electrode). Although it is desirable to use a highly crystalline graphite substrate as the carbon substrate, soft carbon substrates heat-treated at a relatively low temperature, or non-crystalline hard carbon substrates may be used effectively.

Examples of the carbon substrate include mesophase (bulk mesophase) baked carbon using tar and pitch as starting materials, mesophase microspheres, cokes (such as raw coke, green coke, pitch coke, needle coke and petroleum coke), graphite derived from cokes, heat-degradation carbon, graphite carbon fiber, heat-expansion carbon (carbon grown from a gas phase), artificial graphite, natural graphite, carbon black, acetylene black, Ketchen black and activated carbon, for example. Amorphous carbon made from a phenol resin, oxygen cross-linked petroleum pitch, heavy oil and naphthalene is also useful for the purpose of this invention. A plurality of these carbon substrates may be mixed, granulated, coated or laminated. Otherwise, the carbon substrate may be formed by various chemical processes, heat treatment and oxidation in a liquid, gas or solid phase.

For obtaining a high discharge capacitance, graphite materials having an interplanar spacing $d_{002}$ of 0.34 nm as measured by X-ray diffraction and an absolute specific gravity of 2.2 or more are preferable. The expression "interplanar spacing $d_{002}$" as used herein refers to a measured value by the X-ray diffraction method, using CuKα radiation and high purity silicon as a reference sample (Sugio Ohtani, Carbon Fiber, p733-742 (1986), published by Kindai Henshu-sha).

While the particle size of the carbon substrate is not particularly restricted, the preferable particle size is usually in the range of about 10 nm to 50 μm in mean particle diameter.

The shape of the carbon substrate is also not particularly restricted, and fibers and films made from the foregoing materials are available.

Organic polymers carried on the carbon substrate are not particularly restricted provided that the polymer contains an aliphatic amino group on its side chain, and any kinds of the aliphatic amino groups and repeating units may be used. The irreversible capacitance of the carbon substrate can be reduced and a high adhesive property is given to the carbon substrate by using the organic polymer containing the aliphatic amino group on its side chain, although the mechanism or reason for this surprising action is not clear. The beneficial effect of the present invention is not sufficiently achieved when only the main chain of the polymer comprises amine nitrogen.

Any of the primary, secondary, tertiary and quaternary amine (ammonium) groups may be used as the amino group. The primary amine group is preferable from the viewpoints of irreversible capacitance reduction and strong adhesion. The polymeric amine compound may be either a homopolymer or a copolymer, or a copolymer of a monomer containing an aliphatic group on its side chain with another polymer. The aliphatic amine group may be introduced into a previously produced polymer by a modification reaction. The method of manufacturing the amine is not a problem.

Examples of the polymeric amine compound include a polyvinyl amine based polymer, polyallyl amine based polymer, polydiallyl amine based polymer, or diallyl amine-maleic acid copolymer, for example. These amines may be salts such as a hydrochloric acid salt or an ammonium salt, for example.

A polyallyl amine containing an aliphatic amino group on its side chain is most preferable among the amines above because they create excellent irreversible capacitance reduction and strong adhesion. The general formula of such polyallylamine is property.

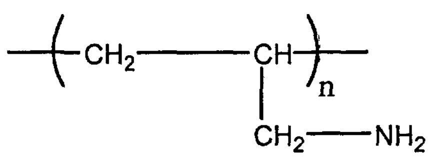

An organic polymer containing an aromatic amino group such as a pyridyl group on its side chain, or an inorganic polymer such as a polymer of a silane coupling agent does not have the beneficial effect of the present invention, since its film-forming ability or adhesive property to the carbon substrate is inadequate.

The heat degradation temperature of the polymeric amine compound is preferably 120°C or more. While the molecular weight of the polymeric amine compound is not particularly restricted, it is usually 300 or more, expressed as weight average molecular weight, in most cases.

The polymeric compound may be used alone, or a combination of two or more kinds of the polymers may be used.

The relationship represented by the term "carry (carrying)" in this invention means that the polymeric amine compound is only in contact with the carbon substrate. It can be coated, absorbed, adsorbed, attached, impregnated,

vacuum-deposited, retained or adhered, as will be apparent.

The method for causing the carbon substrate to carry the polymeric amine compound is not particularly restricted. The method comprises, for example, causing the carbon substrate to contact an aqueous solution or alcoholic solution in which the polymeric amine compound is dissolved, followed by removing the solvent by heat or evacuation, or cooling the carbon substrate after allowing the carbon substrate to contact a molten polymeric amine compound.

The carbon substrate may be treated with the polymeric amine compound either before, during or after manufacturing the anode.

It is preferable in the present invention that at least a part of the carbon substrate carries the polymeric amine compound after applying any one of the methods described above.

The surface characteristics such as wettability are improved by causing the carbon substrate to carry the high molecular weight amine on its surface. Accordingly, conductivity may be enhanced by using a smaller amount of the modified carbon substrate as compared with using the carbon substrate before modification, when the modified carbon substrate is treated adding a resin as a conductive filler for improving conductivity. Since the modified carbon substrate is a reactive material, it may tightly bond to and react with other materials, as compared with the carbon substrate before modification, when the modified carbon substrate is used as a composite material with other materials.

Specifically, a lithium ion rechargeable battery can manifest an effect for reducing the irreversible capacitance while maintaining a high discharge capacitance by using a carbon substrate of this invention as the anodic material of the battery.

The amount of the high molecular weight amine carried by the carbon substrate is desirably about 0.01% by mass or more, for reducing the irreversible capacitance reduction in the lithium ion rechargeable battery. The upper limit of the amount of the amine is desirably about 10% by mass or less, since electron transfer among carbon particles tends to become blocked when the amount is too large. This tends to cause the charging characteristics to be decreased. The amount is usually about 0.01 to 10% by mass, preferably about 0.05 to 3% by mass.

Additives known in the art such as conductive materials, ionic conductance materials and surface active agents may be used together with the polymeric amine compound in a range not compromising the effect of the present invention for preparing the carbon substrate. These additives may be added when the carbon substrate is allowed to carry the polymeric amine compound, or a carbon substrate carrying the polymeric amine compound may be used together.

While various applications are possible without any restriction for the carbon substrate according to the present invention, such applications can be favorably used as the anode material of a lithium ion rechargeable battery as hitherto described. Accordingly, the present invention provides an anode of a lithium ion rechargeable battery using the carbon substrate, as well as a lithium ion rechargeable battery.

(Lithium ion rechargeable battery)

A high initial discharge efficiency and discharge capacitance are obtainable in a lithium ion rechargeable battery carrying the carbon substrate according to the present invention as the electrode material, because decomposition reactions on the surface of the graphite carbon substrate are remarkably suppressed. Actually, active portions on the surface of the carbon substrate that serve as initiation points of the decomposition reaction of the electrolyte solution are blocked by causing the surface of the carbon substrate to carry the polymeric amine compound. Or, the decomposition reaction of the electrolyte solution gently proceeds, thanks to the polymeric amine compound present on the surface of the carbon substrate, since decomposition products are formed as a uniform thin film and suppress excessive degradation of the electrolyte solution.

The principal constituents of a lithium ion rechargeable battery usually comprise a cathode, an anode and a non-aqueous electrolyte. Each of the cathode and anode comprises lithium ion carriers, and lithium ions are intercalated in the anode during the charging process while lithium ions are deintercalated during the discharge process.

The nature of the lithium ion rechargeable battery according to the present invention is not particularly restricted, except that the carbon substrate is used as the anode material. Other constituents of the battery may be similar to the constituents of a conventional lithium ion rechargeable battery.

(Anode (negative electrode))

The present invention further provides a lithium ion rechargeable battery using an anode (negative electrode) comprising the carbon substrate as hitherto described.

The anode can be formed from a carbon substrate by a similar method to conventional methods. These methods are not in particular restricted, so long as the methods can sufficiently utilize the performance of the carbon substrate, has a high molding ability with the powder, and is able to obtain a chemically and electrochemically stable anode.

A composite anode material prepared by mixing the carbon substrate with a binder may be used for preparing the anode. It is desirable to use a binder that is chemically and electrochemically stable to the non-aqueous electrolyte solution and electrolyte. For example, fluoride resins such as polyvinylidene fluoride and polytetrafluoroethylene, and polyethylene, polyvinyl alcohol, styrene-butadiene rubber and carboxymethyl cellulose may be used, or these polymers may be combined in use.

The binder is preferably used in a proportion of about 1 to 20% by mass relative to the total amount of the composite anode material.

For example, the composite anode material layer can be formed by the steps comprising preparing a carbon substrate having an appropriate particle diameter by sieving, preparing the composite anode material by mixing with the binder, and coating the composite anode material on one or both faces of a current collector.

A solvent may be used for the purpose above. A layer of the composite anode material can be uniformly and tightly bonded to the current collector by coating and drying the composite anode material on the current collector after forming a paste by dispersing the composite anode material in the solvent.

For example, the carbon substrate and a fluorinated resin powder such as polytetrafluoroethylene powder is mixed and kneaded in a solvent such as isopropyl alcohol, and the paste is coated on the current collector. Otherwise, the carbon substrate is mixed with the fluorinated resin powder such as polyvinylidene fluoride powder or a water soluble binder such as carboxymethyl cellulose in a solvent such as N-methyl pyrrolidone, N,N-dimethylformamide, water or alcohol to form a slurry, which is coated on the current collector.

The slurry can be prepared by stirring at about 300 rpm using a wing type homomixer. A high speed stirring of about 2000 to 3000 rpm is also possible for homogeneously dispersing the paste (carbon substrate). The polymeric amine compound is resistant to being peeled off from the carbon substrate even under high sped stirring, since the polymer has excellent adhesion to the carbon substrate that it is difficult to peel off after it has been adhered to the carbon substrate.

An appropriate thickness of the coating layer after coating the mixture of the carbon substrate powder and binder on the current collector is about 10 to 20 μm.

Alternatively, the carbon substrate and the resin powder such as polyethylene and polyvinyl alcohol may be mixed as dry powders, and the mixed powder may be molded by hot-pressing in a mold.

The adhesive strength between the composite anode material and the current collector may be enhanced by press-bonding after forming the composite anode material layer.

The shape of the current collector to be used as the anode includes, though this is not restrictive, a foil, a mesh or a net shape such as an expand metal. Copper, stainless steel and nickel can be used for the material of the current collector. A foil of the current collector has a favorable thickness of about 5 to 20 μm.

(Cathode)

It is preferable to select a cathode material (cathode active material) that is able to dope/de-dope a sufficient amount of lithium. Such cathode active material includes transition metal oxides containing lithium, transition metal-chalcogen compounds, vanadium oxides ($V_2O_5$, $V_6O_{13}$, $V_2O_4$, and $V_3O_8$) and lithium compounds thereof, Chevrel phase compounds represented by the general formula $M_XMo_6S_{8-Y}$ (in the formula, X is in the range of $0 \leq X \leq 4$, Y is in the range of $0 \leq Y \leq 1$, and M represents a metal such as a transition metal), activated carbon and activated carbon fiber.

The lithium containing transition metal oxide is a composite oxide between lithium and the transition metal, and lithium may form a solid solution with two or more kinds of the transition metals. The lithium containing transition metal oxide is represented by $LiM(1)_{1-X}M(2)_XO_2$ (in the formula, X is within a range of $0 \leq X \leq 1$, and M(1) and M(2) comprises at least one kind of the transition metal) or $LiM(1)_{2-Y}M(2)_YO_4$ (in the formula, Y is within a range of $0 \leq Y \leq 1$, and M(1) and M(2) comprises at least one kind of the transition metal).

Examples of the transition metal element include Co, Ni, Mn, Cr, Ti, V, Fe, Zn, Al, In and Sn. The metals Co, Fe, Mn, Ti, Cr, V and Al are preferable.

Examples of the lithium containing transition metal oxide include $LiCoO_2$, a lithium composite oxide represented by $Li_XNi_YM_{1-Y}O_2$ (M is a transition metal element described above except Ni, preferably at least one of the elements selected from Co, Fe, Mn, Ti, Cr, V and Al, and Xand Y are in the range of $0.05 \leq X \leq 1.10$, $0.5 \leq Y \leq 1.0$), $LiNiO_2$, $LiMnO_2$ and $LiMn_2O_4$.

The lithium containing transition metal oxide as described above can be obtained by mixing the starting materials depending on its composition, followed by firing at a temperature range of 600°C to 1000°C under an atmosphere containing oxygen. The starting materials are not restricted to oxides or salts, and the lithium containing transition metal oxide may be synthesized from hydroxides.

Each of the compounds described above may be used alone, or two or more kinds of them may be used together in the present invention. For example, a carbonate such as lithium carbonate may be added.

In forming the cathode using the cathode materials, a composite cathode material comprising, for example, a cathode material, a binder and a conductive material for endowing the electrode with electrical conductivity is coated on both surfaces of the current collector. Any of the binders exemplified in the anode may be used.

The shape of the current collector is not particularly restricted, and any shapes including a box, mesh or net such as an expand metal may be used. The current collector available may include an aluminum foil, a stainless steel foil or a nickel foil. The favorable thickness of the foil is about 10 to 40 μm.

The composite cathode material layer may be formed, as in the case of the composite anode material layer, by preparing a paste by dispersing the composite cathode material in a solvent, and coating the current collector with the paste of the composite cathode material followed by drying. The composite cathode material layer may be press-bonded after forming the layer, in order to uniformly and tightly adhere the composite cathode layer on the current collector.

Various additives such as the conductive material and binder known in the art may be appropriately used in forming the anode and cathode.

(Electrolyte)

Salts of electrolytes used in the conventional non-aqueous electrolyte solution may be also used as the electrolyte according to the present invention. For example, lithium salts available include $LiPF_5$, $LiBF_4$, LiAsF6, $LiClO_4$, $LiB(C_6H_5)$, LiCl, LiBr, $LiCF_3SO_3$, $LiCH_3SO_3$, $LiN(CF_3SO_2)_2$, $LiC(CF_3SO_2)_3$, $LiN(CF_3CH_2OSO_2)_2$, $LiN(CF_3CF_2OSO_2)_2$, $LiN(HCF_2CF_2CH_2OSO_2)_2$, $LiN((CF_3)_2CHOSO_2)_2$, $LiB[(C_6H_3((CF_3)_2)_4]$, $LiAlCl_4$ and $LiSiF_6$. $LiCl_4$, $LiPF_6$ and $LiBF_4$ are preferably used due to their stability against oxidation. The concentration of the electrolyte salt in the electrolyte solution is preferably in the range of about 0.1 to 5 mole/liter, more preferably about 0.5 to 3.0 mole/liter.

The non-aqueous electrolyte may be a liquid type non-aqueous electrolyte, or may be a solid electrolyte or a gel electrolyte, or a polymer electrolyte. A non-aqueous electrolyte battery is constructed as a so-called lithium ion battery when the liquid type non-aqueous electrolyte is used, and the non-aqueous electrolyte battery is constructed as a polymer electrolyte battery (a polymer battery) such as a polymeric solid battery and polymeric gel battery when the solid electrolyte, gel electrolyte and polymer electrolyte are used.

Aprotic organic solvents such as ethylene carbonate, propylene carbonate, dimethyl carbonate, diethyl carbonate, 1,1- or 1,2-dimethoxyethane, 1,2-diethoxyethane, tetrahydrofuran, 2-methyl tetrahydrofuran, γ-butyrolactone, 1,3-dioxolane, 4-methyl-1,3-dioxolane, anisole, diethyl ether, sulfolane, dimethyl sulfolane, acetonitrile, chloronitrile, propionitrile, trimethyl borate, tetramethyl silicate, nitromethane, dimethylformamide, N-methyl pyrrolidone, ethyl acetate, trimethyl orthoformate, nitrobenzene, benzoyl chloride, benzoyl bromide, tetrahydrothiophene, dimethylsulfoxide, 3-methyl-2-oxazolidone, ethylene glycol and dimethylsalfite can be used as liquid type non-aqueous electrolytes.

A matrix polymer gelated with a plasticizer (non-electrolyte solution) may be added in the non-aqueous electrolyte to be used for the polymer electrolyte such as a polymeric solid material and polymeric gel material. The matrix polymers available include ether based polymers such as polyethylene oxide and cross-linked polyethylene oxide, polymethacrylate based polymers, polyacrylate based polymers and fluoride based polymers such as polyvinylidene fluoride and vinylidene fluoride-hexafluoropropylene copolymer. Each of these polymers may be used alone, or as a combination thereof.

The fluoride based polymers such as polyvinylidene fluoride and vinylidene fluoride-hexafluoropropylene copolymer are preferably used from the viewpoint of stability against oxidation-reduction.

The electrolyte salts and non-aqueous solvents as hitherto described may be used for constructing the plasticizer contained in the polymeric solid electrolyte and polymeric gel electrolyte. The concentration of the electrolyte salt as a plasticizer in the non-aqueous electrolyte solution in the gel electrolyte is preferably about 0.1 to 5 mole/liter, more preferably about 0.5 to 2.0 mole/liter.

The method for preparing the solid electrolyte is not particularly restricted. For example, the solid electrolyte is manufactured by mixing a matrix forming polymer compound, lithium salt and solvent followed by melting them by heating, dissolving a polymer compound and lithium salt in an appropriate organic solvent for mixing followed by evaporating the solvent, and mixing a monomer, lithium salt and solvent followed by irradiating with UV light or an electron beam to form a polymer.

The solvent is added in the solid electrolyte preferably in a proportion of about 10 to 90% by mass, more preferably about 30 to 80% by mass. A proportion of addition of about 10 to 90% by mass makes the solid electrolyte have a high conductivity and mechanical strength to facilitate film formation.

A separator may be used in the lithium rechargeable battery according to the present invention. The separator is not particularly restricted. For example, a woven fabric, non-woven fabric and microporous film made of a synthetic resin are available. While the microporous films made of the synthetic resins are favorably used, a polyolefin based microporous film is suitable among them from the point of thickness, film strength and film resistance. Examples of the polyolefin based microporous film include the microporous films made of polyethylene and polypropylene.

It is made possible to use the gel electrolyte by improving the initial charge-discharge efficiency in the lithium ion rechargeable battery according to the present invention.

The gel electrolyte rechargeable battery is constructed by laminating, for example, the anode containing the carbon substrate, the gel electrode and the cathode in this order, and housing in a battery sheath. The gel electrolyte may be disposed at the outside of the anode and cathode in addition to the construction above. The irreversible capacitance is suppressed to be low in the gel electrolyte rechargeable battery using the carbon substrate for the anode, even when propylene carbonate is contained in the gel electrolyte, and a carbon substrate powder having a small particle diameter enough for suppressing impedance low is used. Consequently, a large discharge capacitance as well as a high initial charge-discharge efficiency can be obtained.

The lithium rechargeable battery may have a variety of different designs. The shape of the battery is not particularly restricted, and can be arbitrarily selected from cylindrical, rectangular, coin, button and sheet shapes. It is desirable that the battery comprises a device for shutting down the electric current by sensing an increased inner pressure of the battery in emergencies such as excess charging, in order to obtain a safer sealed type non-aqueous electrolyte battery. A laminated film may be sealed in the polymeric solid electrolyte battery and polymeric gel electrolyte battery.

Examples

While the present invention is described in more detail hereinafter, the present invention is not restricted to these examples. While many experiments have been carried out by use of a button type rechargeable battery, as shown in FIG. 1 for evaluation, many other practically used batteries can be manufactured and used in accordance with conventional methods based on the concept of the present invention.

(Evaluation battery)

The evaluation battery comprises a working electrode (anode :negative electrode) 2 containing a carbon substrate capable of using as a working substance for the anode in the practical battery, and a counter-electrode 4 comprising a lithium foil.

The disk-shaped working electrode (anode) 2 and a current collector 7 housed in a sheath cup 1, and the counter-electrode 4 housed in an outer sheath can 3 are laminated via a separator 5 impregnated with an electrolyte solution. Peripheries of the sheath cup 1 and outer sheath can 3 are caulked with an insulation gasket 6 to seal the battery.

Example 1

(Preparation of carbon substrate)

An aqueous solution with a concentration of 0.5% by mass was prepared by dissolving polyallylamine (PAA 03 with a weight average molecular weight of 3,000 made by Nitto Spinning Co.).

Into 100 parts by mass of aqueous polyallylamine solution with a concentration of 0.5% by mass, 100 parts by mass of particles (number average particle diameter: 20 µm, absolute specific gravity: 2.26, interlattice spacing $d_{002}$: 0.3360 nm; prepared by converting a mesophase (bulk mesophase) carbon material obtained by a heat-treatment of pitch into graphite) were added, and the mixture was stirred at room temperature for 1 hour. Moisture was removed at 120°C with additional stirring, followed by vacuum-drying at 120°C to completely remove moisture, thereby obtaining a carbon powder carrying the polymeric amine compound. The working electrode (anode) was manufactured using this carbon powder carrying the polymeric amine compound.

(Preparation of composite anode paste)

(1) Mixed were 90% by mass of the carbon powder treated with the polymeric amine compound obtained above, and 10% by mass of polyvinylidene fluoride as a binder. N-methyl pyrrolidone was further added as a solvent, and the mixture was kneaded with a wing-type homomixer at a rotation speed of 300 rpm for 5 minutes to prepare a paste (A) of the composite anode (negative electrode) material.

(2) The paste (A) of the composite anode material prepared in (1) was further stirred with the homomixer at 3000 rpm for 3 hours to prepare a paste (B) of the composite anode material.

(Preparation of working electrode (anode))

(3) The pastes (A) or (B) of the composite anode material was coated on a copper foil (a current collector 7) with a uniform thickness, and was dried by evaporating the solvent at 90°C under a reduced pressure. Then, the composite anode material coated on the copper foil was pressurized with a roller press, and the copper foil was punched into a disk with a diameter of 15.5 mm, thereby manufacturing the working electrodes (anodes) 2 comprising the paste (A) or (B), respectively.

(Preparation of counter-electrode)

The counter-electrode 4 was prepared by punching a metallic lithium foil into a disk with a diameter of 15.5 mm.

(Preparation of electrolyte)

The electrolyte was prepared as follows.
Mixed were 30 mol% of propylene carbonate, 50 mol% of ethylene carbonate and 20 mol% of dimethyl carbonate, and $LiPF_6$ was dissolved in this mixed solvent to prepare a non-aqueous electrolyte solution.
The non-aqueous electrolyte solution was impregnated into a separator 5 comprising a polypropylene porous material.

(Preparation of evaluation battery)

The separator 5 impregnated with the electrolyte solution as described above was injected between the working electrode 2 and counter-electrode 4, and the working electrode 2 and counter-electrode 4 were housed in the sheath cup 1 and outer sheath can 3, respectively. The peripheries of the sheath cup 1 and outer sheath can 3 are caulked with an insulation gasket 6 to seal the battery, thereby obtaining the evaluation battery.
The following charge-discharge tests were carried out at 25°C with respect to the evaluation batteries manufactured.

(Charge-discharge test)

The battery was charged with a constant electric current of 0.2 mA until the circuit voltage attains 0 mV, when the battery was switched to constant voltage charging. Charging was continued until the electric current reaches 20 μA, and was halted for 120 minutes.
Subsequently, the battery was discharged with a constant electric current of 0.2 mA until the circuit voltage reaches 2.5V. The charge and discharge capacitance was determined from the total amount of the electric current in the first cycle, and the initial charge-discharge efficiency was calculated from the following equation:

$$\text{initial charge-discharge efficiency} = (\text{discharge capacitance}/\text{charge capacitance}) \times 100\ (\%)$$

The process when lithium ions were doped in the carbon substrate, and the process when lithium ions were de-doped from the carbon substrate were termed as the charge process and discharge process, respectively.
The discharge capacitance (mAh/g) per 1 g of the carbon substrate powder, and the initial charge-discharge efficiency (%) measured are shown in TABLE 1.
As shown in TABLE 1, the lithium ion rechargeable battery using the carbon substrate according to the present invention as the working electrode (corresponds to the anode in the practical battery) showed a high discharge capacity while showing a high initial charge-discharge efficiency (or small irreversible capacitance).
A high initial charge-discharge efficiency was also obtained in the working electrode manufactured from the paste (B) prepared by applying long time stirring to the usual paste (A).

<u>Examples 2 to 11</u>

The carbon substrates were prepared by the same method as in Example 1 to manufacture the lithium ion secondary batteries, except that the carbon substrate, the amount of polyallylamine carried by the carbon substrate and the kind of the polymeric amine compound were changed as shown in TABLE 1.

The obtained results of the measurements of the discharge capacitance and initial charge-discharge efficiency are shown in TABLE 1.

As shown in TABLE 1, the lithium ion rechargeable battery using the carbon substrate according to the present invention showed a high discharge capacitance while showing a high initial charge-discharge efficiency. The high initial charge-discharge efficiency was also obtained in the working electrode manufactured from the paste (B) prepared by applying long time stirring to the usual paste (A).

Comparative Examples 1 to 5

The lithium ion secondary batteries were manufactured using the carbon substrates that were not subjected to polyallylamine treatment as in Examples 1 and 4 to 7.

The discharge capacitance and initial charge-discharge efficiency measured are shown in TABLE 1.

TABLE 1 shows that the initial charge-discharge efficiency was low when each carbon substrate was used as the material of the working electrode (anode) without causing each carbon substrate to carry any polymeric amine compound.

Comparative Examples 6 to 8

The lithium ion secondary batteries were manufactured by the same method as in Example 1, except that the carbon substrate was treated with the amine compounds (monomers) shown in TABLE 1 in place of the polymeric amine compounds in Example 1. The obtained discharge capacitance and initial charge-discharge efficiency measured are shown in TABLE 1.

TABLE 1 shows that the initial charge-discharge efficiency was low when the carbon substrate carried the amine compound (monomer).

Comparative Example 9

The carbon substrate was not treated with the polymeric amine compound as in Example 1, but was treated with a solution prepared by adding 0.01 mol/liter of triethylamine in a non-aqueous electrolyte.

The results of the measurements of the discharge capacitance and initial charge-discharge efficiency are shown in TABLE 1.

TABLE 1 shows that the effect for improving the initial charge-discharge efficiency was small when an amine compound was added in the electrolyte solution, in place of causing the carbon substrate to carry the polymeric amine compound.

Comparative Examples 10 to 18

The lithium ion secondary batteries were manufactured by the same method as in Example 1, except that the polyallylamine in Example 1 was changed by substituting the resins shown in TABLE 1. The obtained results of the measurements of the initial discharge capacitance and initial charge-discharge efficiency are shown in TABLE 1. The carbon substrate for the anode was manufactured by preparing a solution or dispersion of each resin, mixing the solution or dispersion with the carbon powder, and evaporating off the solvent.

The initial charge-discharge efficiency became lower than that in the Examples, when conventionally used resins were used in place of polyallylamine. Particularly, the initial charge-discharge efficiency was further decreased by using the paste (B) prepared by applying a further stirring treatment to the paste (A).

The lithium ion rechargeable battery using the carbon substrate according to the present invention as the anode material was able to decrease the irreversible capacitance while maintaining the high discharge capacitance, or was able to largely improve the initial charge-discharge efficiency. Since the surface characteristics such as wettability of the carbon substrate according to the present invention were modified, the carbon substrate certainly carries the polymeric amine compound, which is at most hardly peeled off by stirring, and the effect of the surface modification of the battery can be maintained.

TABLE 1

| | CARBON SUBSTRATE | AMINE COMPOUND | | PASTE (A)*1 | | PASTE (B)*2 | |
|---|---|---|---|---|---|---|---|
| | | KIND OF AMINE | BLEND RATIO RELATIVE / 100 PARTS BY WEIGHT OF CARBON SUBSTRATE | DISCHARGE CAPACITY (mAh/g) | INITIAL CHARGE-DISCHARGE EFFICIENCY (%) | DISCHARGE CAPACITY (mAh/g) | INITIAL CHARGE-DISCHARGE EFFICIENCY (%) |
| EXAMPLE 1 | BULK MESO GRAPHITE | POLYALLYLAMINE | 0.5 | 352 | 88 | 353 | 83 |
| EXAMPLE 2 | BULK MESO GRAPHITE | POLYALLYLAMINE | 3 | 350 | 89 | 351 | 84 |
| EXAMPLE 3 | BULK MESO GRAPHITE | POLYALLYLAMINE | 0.05 | 353 | 86 | 354 | 82 |
| EXAMPLE 4 | NATURAL GRAPHITE | POLYALLYLAMINE | 1 | 354 | 90 | 354 | 83 |
| EXAMPLE 5 | ARTIFICIAL GRAPHITE | POLYALLYLMINE | 1 | 348 | 87 | 350 | 80 |
| EXAMPLE 6 | MCMB GRAPHITE | POLYALLYLAMINE | 1 | 339 | 91 | 340 | 85 |
| EXAMPLE 7 | RAW COKE GRAPHITE | POLYALLYLAMINE | 1 | 347 | 89 | 350 | 83 |
| EXAMPLE 8 | BULK MESO GRAPHITE | POLY-N-METHYL ALLYLAMINE | 0.5 | 351 | 86 | 352 | 80 |
| EXAMPLE 9 | BULK MESO GRAPHITE | POLY-N,N-DIMETHYL ALLYLAMINE | 0.5 | 351 | 84 | 352 | 79 |
| EXAMPLE 10 | BULK MESO GRAPHITE | POLYDIALLYLAMINE AMMONIUM SALT | 0.5 | 352 | 83 | 353 | 76 |
| EXAMPLE 11 | BULK MESO GRAPHITE | DIALLYLAMINE-MALEIC ACID COPOLYMER | 0.5 | 350 | 82 | 351 | 75 |
| COMPARATIVE EXAMPLE 1 | BULK MESO GRAPHITE | - | - | 354 | 48 | - | - |
| COMPARATIVE EXAMPLE 2 | NATURAL GRAPHITE | - | - | 356 | 68 | - | - |
| COMPARATIVE EXAMPLE 3 | ARTIFICIAL GRAPHITE | - | - | 349 | 53 | - | - |
| COMPARATIVE EXAMPLE 4 | MCMB GRAPHITE | - | - | 340 | 69 | - | - |
| COMPARATIVE EXAMPLE 5 | RAW COKE GRAPHITE | - | - | 348 | 51 | - | - |

Bulk meso graphite: bulk mesophase carbon is converted into graphite.
MCMB graphite: mesophase micrsphere carbon is converted into graphite.
Raw coke graphite: raw coke is converted into graphite.
*1) no high speed stirring (low speed stirring only)
*2) with high speed stirring

TABLE 1 (continued)

| | CARBON SUBSTRATE | AMINE COMPOUND | | PASTE (A) *1 | | PASTE (B) *2 | |
|---|---|---|---|---|---|---|---|
| | | KIND OF AMINE | BLEND RATIO RELATIVE / 100 PARTS BY WEIGHT OF CARBON SUBSTRATE | DISCHARGE CAPACITY (mAh/g) | INITIAL CHARGE-DISCHARGE EFFICIENCY (%) | DISCHARGE CAPACITY (mAh/g) | INITIAL CHARGE-DISCHARGE EFFICIENCY (%) |
| COMPARATIVE EXAMPLE 6 | BULK MESO GRAPHITE | DODECYLAMINE | 1 | 353 | 54 | - | - |
| COMPARATIVE EXAMPLE 7 | BULK MESO GRAPHITE | HEXAMETHYLENEDIAMINE | 1 | 353 | 62 | - | - |
| COMPARATIVE EXAMPLE 8 | BULK MESO GRAPHITE | TRIETHYLAMINE | 1 | 353 | 60 | - | - |
| COMPARATIVE EXAMPLE 9 | BULK MESO GRAPHITE | TRIETHYLAMINE (0.01 mol/L) | | 354 | 58 | - | - |
| COMPARATIVE EXAMPLE 10 | BULK MESO GRAPHITE | POLYETHYLENE OXIDE | 0.5 | 347 | 78 | 350 | 59 |
| COMPARATIVE EXAMPLE 11 | BULK MESO GRAPHITE | POLYPROPYLENE OXIDE | 0.5 | 346 | 71 | 350 | 53 |
| COMPARATIVE EXAMPLE 12 | BULK MESO GRAPHITE | POLYVINYL ALCOHOL | 0.5 | 346 | 74 | 349 | 59 |
| COMPARATIVE EXAMPLE 13 | BULK MESO GRAPHITE | POLYTETRAFLUOROETHYLENE | 0.5 | 335 | 79 | 346 | 64 |
| COMPARATIVE EXAMPLE 14 | BULK MESO GRAPHITE | POLYETHYLENE | 0.5 | 339 | 76 | 349 | 51 |
| COMPARATIVE EXAMPLE 15 | BULK MESO GRAPHITE | STYRENE-BUTADIENE RUBBER | 0.5 | 336 | 75 | 350 | 50 |
| COMPARATIVE EXAMPLE 16 | BULK MESO GRAPHITE | POLYVINYLIDENE FLUORIDE | 0.5 | 349 | 77 | 351 | 53 |
| COMPARATIVE EXAMPLE 17 | BULK MESO GRAPHITE | HYDROXYETHYL CELLULOSE | 0.5 | 338 | 78 | 343 | 57 |
| COMPARATIVE EXAMPLE 18 | BULK MESO GRAPHITE | POLYAZIRIDINE | 0.5 | 343 | 78 | 348 | 65 |

Bulk meso graphite: bulk mesophase carbon is converted into graphite.
MCMB graphite: mesophase microsphere carbon is converted into graphite.
Raw coke graphite: raw coke is converted into graphite.
* The electrolyte contains triethylamine in a concentration shown in parentheses in Comparative Example 9.
*1) no high speed stirring (low speed stirring only)
*2) with high speed stirring

## Claims

1. A carbon substrate carrying an organic polymer having a side chain and comprising an aliphatic amino group on said side chain.

2. A carbon substrate according to Claim 1, wherein said amino group is a primary amino group.

3. A carbon substrate according to Claim 1, wherein said organic polymer is polyallylamine.

4. An anode for a lithium ion rechargeable battery comprising a carbon substrate according to Claim 1.

5. A lithium ion rechargeable battery comprising an anode according to Claim 4.

FIGURE 1